(19) Europäisches Patentamt
European Patent Office
Office européen des brevets

(11) Publication number: **0 042 674**
**B1**

(12) **EUROPEAN PATENT SPECIFICATION**

(45) Date of publication of patent specification: **15.08.84**

(51) Int. Cl.³: **B 03 C 5/00,** B 01 D 15/00, C 10 G 32/02

(21) Application number: **81302408.0**

(22) Date of filing: **01.06.81**

(54) **Process for refining electric insulating liquids.**

(30) Priority: **19.06.80 JP 83834/80**

(43) Date of publication of application:
**30.12.81 Bulletin 81/52**

(45) Publication of the grant of the patent:
**15.08.84 Bulletin 84/33**

(84) Designated Contracting States:
**AT BE CH DE FR GB IT LI LU NL SE**

(56) References cited:
**FR - A - 2 106 286**
**FR - A - 2 280 414**
**US - A - 4 139 441**

(73) Proprietor: **Inoue, Noboru**
**6-2-3-1205 Nishinakajima**
**Yodogawa-ku Osaka (JP)**

(72) Inventor: **Inoue, Noboru**
**6-2-3-1205 Nishinakajima**
**Yodogawa-ku Osaka (JP)**

(74) Representative: **Tillbrook, Christopher John**
**c/o Reginald W. Barker & Co. 13, Charterhouse Square**
**London EC1M 6BA (GB)**

**EP 0 042 674 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

The present invention relates to a process for efficiently absorbing and eliminating impurities in electric insulating liquids by means of a combination of high electric field action and ion-radical absorbent action. These impurities consists primarily of low molecular weight materials ordinarily present in low concentrations in the electric insulating liquid.

At present, oily liquids, such as vegetable or mineral oils are used as insulating liquids and these materials are relatively pure electric insulating liquids per se. However, the life of such insulating oils depends upon the degree of refinement from the polar compounds or unsaturated compounds which are present in the oils, when a low degree of refining of such oils is carried out. Such polar and/or unsaturated compounds serve to deteriorate the electric insulating capacities of the liquid by, e.g. making them more conductive and thus such polar and unsaturated compounds are undesirable.

In addition to deterioration by the undesirable contaminants described above, the conventionally used oily insulating liquids deteriorate as a result of polymerization caused by the existing oxygen or hydrogen in the liquids, or by condensation due to the existence of hydrogen generated from a Corona discharge when used as an electric insulating liquid. To counteract the above, the insulating oils should be refined as highly as possible before pouring into an electrical device so as to eliminate electrically conductive impurities of low molecular weight at low concentrations as discussed above, which contaminants seem to represent the chief cause of deterioration of these liquids.

Description of the prior art

Up to the present time, the fine particles of contaminants found in insulating liquids, e.g., polar compounds and unsaturated compounds, have been removed by absorption with absorbents such as activated kaolin or activated alumina and the coarse or large particles have been eliminated by such means as a percolator or a centrifugal separation and precipitation device.

The removal of such fine particles has been largely ineffective, because the absorbent pore size of the aforementioned absorbents are relatively large, specifically in that activated kaolin has a pore size of 8 to 18 nanometres (80 to 180 Å) and the activated alumina has a pore size ranging from 5 to 15 nanometres (50 to 150 Å). This large pore size causes a loss of the oily liquid itself because the pore sizes of these materials are such as to absorb substantial quantities of such insulating liquid, while at the same low molecular weight fine particles of contaminants are not sufficiently absorbed by such activated alumina and kaolin materials, because such activated absorbents indiscriminately permit the absorption of the oil and low molecular weight materials and do not preferentially absorb the low molecular weight contaminants, which is the very purpose of such absorption procedure. Further, the absorbing powers of these kaolin and alumina materials are such that the pore capillarity of said materials are not very strong compared with the viscous resistance of the oils and thus the absorbing power is limited and the percentages of low molecular weight contaminants of low concentration absorbed by these conventional materials are extremely low and practically non-existent.

As an example of the absorptive capacity of the kaolin and alumina materials, when the hydrate concentration of insulating oils is 200 ppm, activated kaolin has the capacity to lower the concentration of such contaminants only to 50—60 ppm whereas activated alumina lowers it to about 30 ppm. To lower the hydrate concentration less than this figure, i.e. to 5—10 ppm, it is necessary to use vacuum evaporation together with the absorbing process and a large quantity of absorbent and a long processing time are required.

According to the prior art, there are other methods of refining such electrical insulating oils. One method is to impart a static electrical field to the condensation absorbent mixed with the insulating liquid and another method is to impart a static voltage from an electrode where the porous substances are initially filled in between the electrodes. However, the former method has the disadvantage that the condensation absorbent immersed in the liquid causes oil deterioration and the latter method has the disadvantage that leaking electric current increases in the early stage by agglutinating the fine particles to the substance to be filtered and it takes time to reproduce the absorbing fine particles, which are re-scattered in the liquid by the action of this electric current.

Another prior art method is taught in United States Patent No. 4,139,441, in which pretreatment by an oscillating electric field is employed to improve electrofiltration of solids from a liquid by adherence to bodies subject to a static electric field.

Summary of the invention

According to the invention there is provided a process of refining an electric insulating liquid to remove contaminant particles therefrom, which process comprises applying an electric field to the liquid to ionize or charge the contaminant particles and exposing the liquid to a surface contactant to which said contaminant particles adhere, characterised by exposure, subsequent to an ionizer stage, to an absorbent having an ion-radical structure with small pores to remove finer charged contaminant particles and then elimination of coarse particles, not previously absorbed, by means of separator.

Such absorbent material having an ion-radical, such as zeolite, has pores which are generally smaller than the molecules of the electrical insulating liquid whose absorption thereby is therefore inhibited but at the same time the pores are large enough to permit the smaller, lower molecular weight, molecules of the contaminants or impurities, particularly electrically conductive impurities, to be selectively and preferentially absorbed.

Brief description of the drawings

There now follows a description of some particular embodiments of the invention, by way of example only with reference to the accompanying drawings, in which:

Figure 1 is a flow sheet showing a first embodiment of the present invention and the apparatus employed;

Figure 2 shows another embodiment of the present invention and apparatus to carry out such embodiment; and

Figure 3 is a flow diagram showing still another embodiment of the present invention and the apparatus to be employed.

Detailed description of the invention

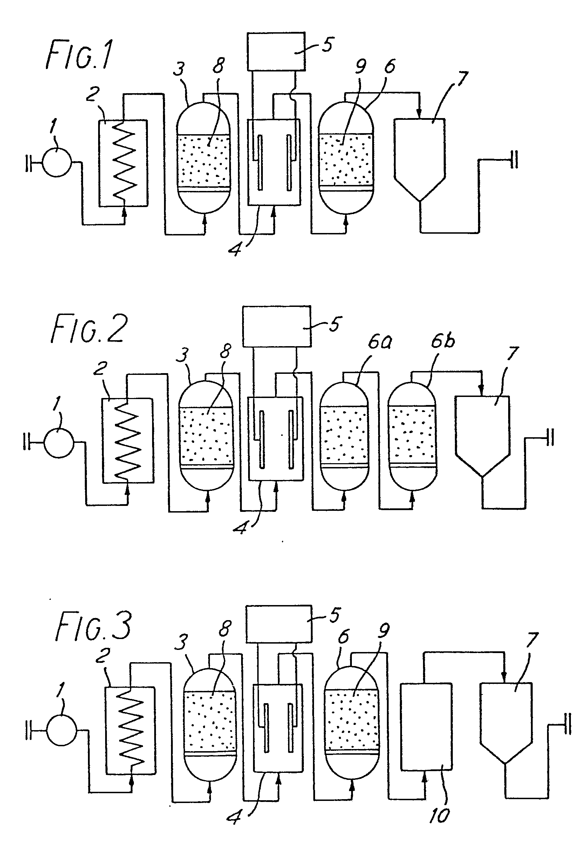

Figure 1 represents one embodiment of the present invention. In Figure 1, 1 is a pump, 2 is a heater, 3 is a front treatment tank, 4 is an ionizer, 5 is its power resource device, 6 is an absorption tank and 7 is a percolator.

An electric insulating liquid to be treated is continuously sent to the ionizer 4 after passing through the heater 2 and the front treatment tank 3 by operation of the pump 1. The front treatment tank 3 is filled with absorbents 8, such as activated kaolin and activated alumina, and the insulative effect of the untreated liquid increases by dehydrating and eliminating most of the condensation molecules by absorption after contacting the absorbent material 8. Thus, the front treatment tank 3 is a first absorbent treatment designed to increase the effect of ionizing and electrifying the insulating material in the ionizer 4. Thus, other absorbents, such as activated carbon or a zeolite absorbent can be used in the same tank as long as the same results and effect are obtained or indeed mixtures of such absorbents may be used.

The heater 2 is for activating the absorptive capacity of the front treatment tank 3 and the heating temperature is 50—60°C, when the activated kaolin or the activated alumina is used in the front treatment tank 3. If other absorbents are used, it is desirable to maintain the heating temperature below this range because the liquid easily deteriorates at temperatures higher than 60°C.

In the ionizer 4, Figure 1, a high voltage electric field is imparted to the untreated liquid. This high voltage electric field can be replaced by a static electric field, an alternating electric field, a high frequency electric field and combined or superimposed electric fields, etc. The means are not so important as the ultimate objective which is to ionize or charge the impurities so that they are easily removed in a subsequent absorptive step described later. By the action of the high voltage electric field, the impurities in the liquid are ionized or charged with electricity and at the same time the fine particles are condensed and tend to adhere to each other in solution, thereby forming somewhat larger or coarser particles.

The ionized and electrified liquid in ionizer 4 of Figure 1 is sent into the following absorption tank 6. A granule-shaped or splinter-shaped absorbent 9 having ion-radicals in its structure is present in the absorption tank 6. As an absorbent 9 to be used in absorption tank 6, a zeolite absorbent can be employed, and/or an activated absorbent, such as an activated carbon material and/or a resinous absorbent or mixtures thereof, as long as the absorbent has an ion-radical in its structure. Preferred absorbents are zeolite and activated carbon. Activated carbon materials and their method of preparation are well known in the art and zeolites are a class of synthetic aluminum silicates that can be hydrated, and are of the type:

$$Na_2O.Al_2O_{3\cdot m}SiO_3.xH_2O.$$

These compounds have been disclosed in detailed in R. F. Gould "Molecular Sieve Zeolites—I", Advances in Chemistry Series 101, American Chemical Society, Washington, D.C. 1971.

Since the absorbing pore side of zeolite absorbents contemplated herein are ordinarily less than 1 nanometre [10 angstroms (Å)] and that of activated carbon absorbents are usually less than 4 nanometres [40 angstoms (Å)] in general, these porous structures are so much smaller than the molecules of the treated electric insulating liquid that the molecules of the liquid are not absorbed and thus loss of the liquid as happens in the prior art method is avoided. Moreover, since the pore sizes of such absorbents are small, they have a high capacity to absorb the low molecular impurities present in such liquids and this, coupled with the coulomb force or attraction between the absorbent and the charged impurities in the previous step, makes it possible with the use of such absorbents to selectively eliminate these low molecular weight contaminants which interfere with the insulating properties of the electrical insulating fluid. Of course, the absorbent may be an absorbent with an ion-radical or a cation-radical, or mixtures thereof, depending on whether or not the charge on the contaminants is positive or negative.

As another feature of the present invention, the absorbent, such as a zeolite absorbent, is coated on the surface thereof with the same substance or conductive contaminants known to exist in the insulating fluids, such as iron, copper and cadmium molecules or irons. By

applying this coating, the absorption of impurities is speeded up by virtue of the multilayer electro-static effect that occurs, in that the same kind of ion grows in accumulated layers in stratified form, when the heavy metal ion begins to agglutinate on the surface of the absorbent.

Referring still to the embodiment in Figure 1, the liquid is passed through the absorption tank 6 into the percolator 7 where the coarse or large particles which are unabsorbed by the absorbent in absorption tank 6 are separated out or eliminated. Indeed, this percolator can be substituted in Figure 1 by any device which can eliminate the coarse particles directly so a device such as a centrifuge and precipitation tank can be used instead of the percolator 7. These coarse impurities, of course, are those impurities which become agglutinated by the action of the high voltage electric field applied in the ionizer 4 which cause the particles to grow to micro-unit size, such that they are not absorbed by the absorbent 9 in the tank 6.

Figure 2 shows another embodiment of the present invention having two absorption tanks following the ionizer 4. The first absorption tank 6a is filled with an absorbent having anion-radicals, such as zeolite absorbent and a second absortion tank 6b filled with an absorbent having a cation-radical in its structure, such as typified by activated carbon absorbents; these two absorption tanks 6a and 6b have absorbents of opposite polarities. By this procedure, the cation-radical impurities in the electrical insulating liquid are eliminated in the first absorption tank 6a and the anion-radical impurities are eliminated in the second absorption tank 6b. Since the absorbent used may have many types of ion-radicals in its structure, the absorbent for each absorption tank can be suitably chosen so as to eliminate contaminants charged with oppositely charged impurities. According to Figure 2, the other parts of the apparatus are the same as in Figure 1 namely, the pump 1, the heater 2, the front treatment tank 3, the ionizer 4 and the percolator 7 are the same as in Figure 1.

Figure 3 shows still another embodiment of the present invention. According to this embodiment, an idle tank 10 is installed between the absorption tank 6 and the direct eliminating device, such as the percolator 7. By this procedure, the tank 10 serves to maintain the liquid in the tank to condense and agglutinate the particles so as to facilitate efficient elimination in percolator 7 and/or any other particle eliminating device. When said tank 10 is not employed, the pipes between tank 6 and percolator 7 may be adjusted in length to increase the time between the exit from tank 7 and entrance into percolator 7 so as to provide sufficient time to increase the condensation or agglutination of the particles not absorbed in the absorbent 6.

Furthermore, the heater 2 and the front treatment tank 3 comprising the first treatment steps of the disclosed process, preceding the ionizer 4 can be suitably modified or omitted in the case when the insulating liquid having good insulating quality is refined. By refining herein is also meant the regeneration of the used liquid so as to purify the electrical insulating liquid after being used in an electrical device.

## Claims

1. A process of refining an electric insulating liquid to remove contaminant particles therefrom, which process comprises applying an electric field to the liquid to ionize or charge the contaminant particles and exposing the liquid to a surface contactant to which said contaminant particles adhere, characterised by exposure, subsequent to an ionizer stage, to an absorbent having an ion-radical structure with small pores to remove finer charged contaminant particles and then elimination of coarse particles, not previously absorbed, by means of a separator.

2. A process according to claim 1 wherein the contaminant particles are selected from the group consisting of low molecular weight polar compounds, metal compounds or metal ions and mixtures thereof, which particles tend to deteriorate the insulating properties of the electric insulating liquid, unless removed, and wherein the contaminants are present in the electric insulating liquid in low concentrations.

3. A process according to claim 1 wherein the absorbent is zeolite.

4. A process according to claim 3 wherein the pore size of the zeolite is less than about 1 nanometre [10 angstroms].

5. A process according to claim 1 wherein the absorbent is activated carbon.

6. A process according to claim 5 where the activated carbon has a pore size of less than 4 nanometres [40 angstroms].

7. A process according to claims 1, 2, 3, 4, 5 and 6 wherein the absorbent is coated with metallic compounds containing the same metals known to be present as a contaminant in the electric insulating liquid, which coating serves to speed up the process of absorbing the metal contaminants by the coated absorbent.

8. A process according to claim 1 in which the electric insulating liquid, after being subjected to the electric field is subjected to two absorption steps by (1) contacting the liquid first with an absorbent containing anion-radicals in its structure and then (2) contacting the liquid with an absorbent containing cation-radicals in its structure.

9. A process according to claim 8 in which the absorbent in step (1) is zeolite and the absorbent in step (2) is activated carbon.

10. A process according to claim 9 in which one or both absorbents are coated with metallic compounds containing the same metals known to be present as a contaminant in the electric insulating liquid so as to speed up the process

of absorbing the metal contaminant by the coated absorbent.

11. A process according to claims 1, 2, 3, 4, 5, 6, 8, 9 and 10 in which the electric insulating liquid is first heated and then subsequently contacted with an absorbent prior to the charging step with the electric field to preliminarily remove contaminant particles therefrom.

12. A process according to claim 11 in which the absorbent used in the absorbing step prior to said charging step with the electric field is selected from the group consisting of kaolin, activated alumina, zeolite, activated carbon and mixtures thereof.

13. A process according to claim 1 wherein the electric field is a static electric field applied with a high voltage.

14. A process according to claim 1 wherein the electric field applied is an alternating electric field.

15. A process according to claim 1 wherein the electric field is a high frequency electric field.

16. A process according to claim 1 wherein two or more means of applying the electric field are combined from the means defined in claims 13, 14 and 15.

17. A process according to claim 1 in which the device used to eliminate the coarse particles from the electric insulating material after the absorbent step is a percolator.

18. A process according to claim 1 wherein the device used to eliminate the coarse particles from the electric insulating liquid after the absorbent step is a centrifuge.

19. A process according to claim 1 wherein the device used to eliminate the coarse particles from the electric insulating liquid after the absorbent step is a precipitation tank.

20. A process according to claims 1, 17, 18 or 19 wherein the electric insulating liquid charged by the electric field is transferred first to a settling vessel prior to being introduced into the device for eliminating the rough particles so as to permit the coarse particles to settle out prior to removal in the device for eliminating the coarse particles.

**Patentansprüche**

1. Verfahren zum Reinigen einer elektrisch isolierenden Flüssigkeit zur Entfernung kontaminierender Partikel, be dem die Flüssigkeit zur Ionisierung bzw. Aufladung der kontaminierenden Partikel einem elektrischen Feld unterworfen und einer Fläche ausgesetzt wird, an der die kontaminierenden Partikel bei Berührung anhaften, gekennzeichnet durch Aussetzen der Flüssigkeit nach der Ionisierungsstufe einem Absorptions mittel mit einer Ion-Radikal-Struktur mit kleinen Poren zur Entfernung feinerer, geladener kontaminierender Partikel und anschließender Eliminierung grober, vorangehend nicht absorbierter Partikel mit Hilfe eines Separators.

2. Verfahren nach Anspruch 1, bei dem die kontaminierenden Partikel aus der Gruppe ausgesucht werden, die aus niedrig molekulargewichtigen polaren Verbindungen, Metallverbindungen oder Metallionen und Mischungen daraus besteht, wobei die Partikel die isolierenden Eigenschaften der elektrisch isolierenden Flüssigkeit ohne deren Entfernung zu verschlechtern pflegen und bei dem die Kontaminanten in der elektrisch isolierenden Flüssigkeit in geringer Konzentration vorhanden sind.

3. Verfahren nach Anspruch 1, bei dem das Absorptionmittel Zeolit ist.

4. Verfahren nach Anspruch 3, bei dem die Porengröße des Zeolit weniger als ungefähr 1 nm (10 Å) beträgt.

5. Verfahren nach Anspruch 1, bei dem das Absorptionsmittel aktivierte Kohle ist.

6. Verfahren nach Anspruch 5, bei dem die aktivierte Kohle eine Porengröße von weniger als 4 nm (40 Å) aufweist.

7. Verfahren nach Anspruch 1, 2, 3, 4, 5 und 6, bei dem das Absorptionsmittel mit metallischen Verbindungen überzogen ist, die dieselben Metalle enthalten, die bekanntermaßen als Kontaminanten in der elektrisch leitenden Flüssigkeit enthalten sind, wobei der Überzug zur Beschleunigung der Absorbierung der Metallkontaminanten durch das überzogene Absorptionsmittel dient.

8. Verfahren nach Anspruch 1, bei dem die elektrisch isolierende Flüssigkeit, nachdem sie dem elektrischen Feld ausgesetzt war, zwei Absorptionsstufen unter-worfen wird, durch, 1), Inberührungsbringen der Flüssigkeit zuerst mit einem Absortionsmittel, das Anion-Radikale in seiner Struktur erhält und dann, 2) Inberührungsbringen der Flüssigkeit mit einem Absorptionsmittel, das Kation-Radikale in seiner Struktur enthält.

9. Verfahren nach Anspruch 9, bei dem das Absorptionsmittel in der Stufe 1 Zeolit ist und das Absorptionsmittel in der Stufe 2 aktivierte Kohle ist.

10. Verfahren nach Anspruch 9, bei dem ein oder beide Absorptionsmittel mit metallischen Verbindungen überzogen sind, die dieselben Metalle enthalten, die bekanntermaßen als Kontaminanten in der elektrisch isolierenden Flüssigkeit vorhanden sind, um die Absorption des Metallkontaminanten durch das überzogene Absorptionsmittel zu beschleunigen.

11. Verfahren nach Anspruch 1, 2, 3, 4, 5, 6, 8, 9 und 10, bei dem die elektrisch isolierende Flüssigkeit zuerst erwärmt und dann nachfolgend noch vor dem Aufladungsschritt infolge des elektrischen Feldes mit einem Absorptionsmittel in Berührung gebracht wird, um daraus vorab kontaminierende Partikel zu entfernen.

12. Verfahren nach Anspruch 11, bei dem das Absorptionsmittel, das in der Absorbierungsstufe vor der Aufladungsstufe mit dem elektrischen Feld benutzt wird, aus der Grupper ausgewählt wird, die aus Kaolin, aktiviertem

Aluminiumoxyd, Zeolit, aktivierter Kohle und Mischungen daraus besteht.

13. Verfahren nach Anspruch 1, bei dem das elektrische Feld ein statisches elektrisches Feld ist, das infolge einer hohen Spannung aufgebracht wird.

14. Verfahren nach Anspruch 1, bei dem das aufgebrachte elektrische Feld ein elektrisches Wechselfeld ist.

15. Verfahrren nach Anspruch 1, bei dem das elektrische Feld ein elektrisches Hochfrequenzfeld ist.

16. Verfahren nach Anspruch 1, bei dem zwei oder weitere Mittel zur Aufbringung des elektischen Feldes von den Mitteln Kombiniert werden, die in den Ansprüchen 13, 14 und 15 definiert sind.

17. Verfahren nach Anspruch 1, bei dem die Vorrichtung, die zur Eliminierung der groben Partikel aus dem elektrisch isolierenden Material nach derAbsorptionsstufe benutzt wird, ein Perkolator ist.

18. Verfahren nach Anspruch 1, bei dem die Vorrichtung, die zur Eliminierung der groben Partikel aus der elektrisch isolierenden Flüssigkeit nach dem Absorptionsschritt benutzt wird, eine Zentifuge ist.

19. Verfahren nach Anspruch 1, bei dem die Vorrichtung, die zur Eliminierung der groben Partikel aus der elektrisch isolierenden Flüssigkeit nach dem Absorptionsschritt benutzt wird, ein Niederschlagstank ist.

20. Verfahren nach Anspruch 1, 17, 18 oder 19, bei dem die elektrisch isolierende Flüssigkeit, die durch das elektrische Feld aufgeladen ist, zuerst in ein Absetzgefäß überführt wird noch bevor sie in die Vorrichtung zur Eliminierung der groben Partikel überführt wird, um den groben Partikeln die Möglichkeit zu geben, sich noch vor der Entfernung in der Vorrichtung zur Eliminierung der groben Partikel abzusetzen.

**Revendications**

1. Procédé de raffinage d'un liquide isolant électriquement pour en enlever des particules contaminantes, comprenant l'application au liquide d'un champ électrique pour ioniser ou charger les particules contaminantes et l'exposition du liquide à une surface de contact à laquelle adhèrent lesdites particules contaminantes, caractérisé en ce qu'on l'expose, à la suite d'une opération ionisante, à un absorbant ayant une structure à ions radicaux avec de petits pores pour éliminer les particules contaminantes chargées les plus fines, puis on élimine les particules grossières, non absorbées précédemment, au moyen d'un séparateur.

2. Procédé selon la revendication 1 caractérisé en ce que les particules contaminantes sont selectionnées dans le groupe composé des composés polaires à faible poids moléculaire, des composés métalliques ou des ions métalliques et de leurs mélanges, particules qui tendent à détériorer les propriétés isolantes du liquide isolant électriquement, à moins d'être éliminées, les contaminants étant présents en faibles concentrations dans le liquide isolant électriquement.

3 Procédé selon la revendication 1 caractérisé en ce que l'absorbant est une zéolite.

4. Procédé selon la revendication 3 caractérisé en ce que la dimension des pores de la zéolite est inférieure à 1 nanomètre environ (10 anströms).

5. Procédé selon la revendication 1 caractérisé en ce que l'absorbant est du charbon activé.

6. Procédé selon la revendication 5 caractérisé en ce que le charbon activé a une dimension de pores inférieure à 4 nanomètres (40 angströms).

7. Procédé selon les revendications 1 à 6 caractérisé en ce que l'absorbant est recouvert d'une couche de composés métalliques contenant les mêmes métaux connus pour être présents comme contaminants dans le liquide isolant électriquement, cette couche servant à accélérer le processus d'absorption des contaminants métalliques par l'absorbant recouvert.

8. Procédé selon la revendication 1 caractérisé en ce qu'après avoir été soumis au champ électrique, le liquide isolant électriquement est soumis à deux opérations d'absorption par: (1) mise en contact du liquide d'abord avec un absorbant contenant dans sa structure des anions radicaux, et ensuite (2) mise en contact du liquide avec un absorbant contenant dans sa structure des cations radicaux.

9. Procédé selon la revendication 8 caractérisé en ce que l'absorbant de l'opération 1) est une zéolite et l'absorbant de l'opération 2) est du charbon activé.

10. Procédé selon la revendication 9 caractérisé en ce que l'un ou les deux absorbants sont recouverts d'une couche de composés métalliques contenant les mêmes métaux connus pour être présents comme contaminants dans le liquide isolant électriquement de manière à accélérer le processus d'absorption du contaminant métallique par l'absorbant recouvert.

11. Procédé selon les revendications 1 à 6 et 8 á 10 caractérisé en ce que le liquide isolant électriquement est d'abord chauffé puis mis en contact ensuite avec un absorbant avant l'opération de charge à l'aide d'un champ électrique pour en enlever préliminairement des particules contaminantes.

12. Procédé selon la revendication 11 caractérisé en ce que l'absorbant utilisé dans l'opération d'absorption avant l'opération de charge à l'aide du champ électrique est sélectionné dans le groupe composé du kaolin, de l'alumine activée, de la zéolite, du charbon activé et des mélanges de ces corps.

13. Procédé selon la revendication 1 caractérisé en ce que le champ électrique est un

champ électrique statique appliqué à tension élevée.

14. Procédé selon la revendication 1 caractérisé en ce que le champ électrique appliqué est un champ électrique alternatif.

15. Procédé selon la revendication 1 caractérisé en ce que le champ électrique est un champ électrique à haute fréquence.

16. Procédé selon la revendication 1 caractérisé en ce que deux ou plusieurs moyens d'application du champ électrique sont combinés à partir des moyens définis dans les revendications 13, 14 et 15.

17. Procédé selon la revendication 1 caractérisé en ce que le dispositif utilisé pour éliminer les particules grossières de la matière isolante électriquement après l'opération d'absorption est un percolateur.

18. Procédé selon la revendication 1 caractérisé en ce que le dispositif utilisé pour éliminer les particules grossières du liquide isolant électriquement après l'opération d'absorption est une centrifugeuse.

19. Procédé selon la revendication 1 caractérisé en ce que le dispositif utilisé pour éliminer les particules grossières du liquide isolant électriquement après l'opération d'absorption est un réservoir de précipitation.

20. Procédé selon les revendications 1, 17, 18 ou 19 caractérisé en ce que le liquide isolant électriquement chargé par le champ électrique est transféré d'abord à un réservoir de clarification avant d'être introduit dans le dispositiif d'élimination des particules brutes de manière à permettre aux particules grossières de se déposer avant l'élimination dans le dispositif d'élimination des particules grossiéres.

FIG.1

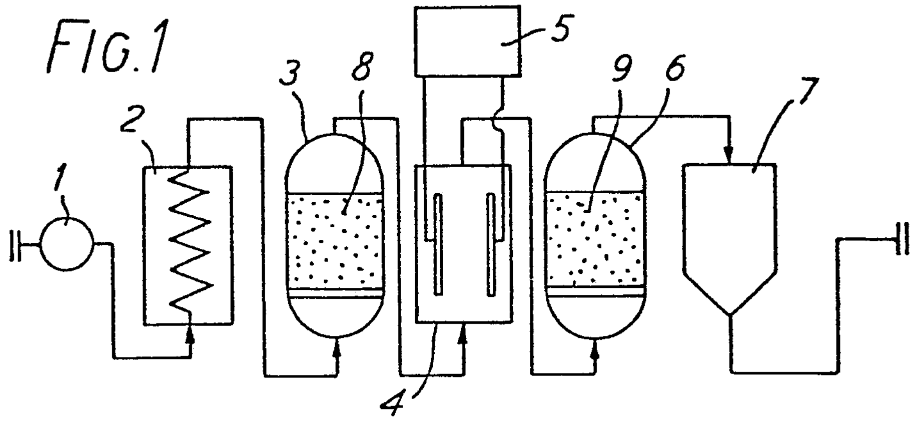


FIG.2

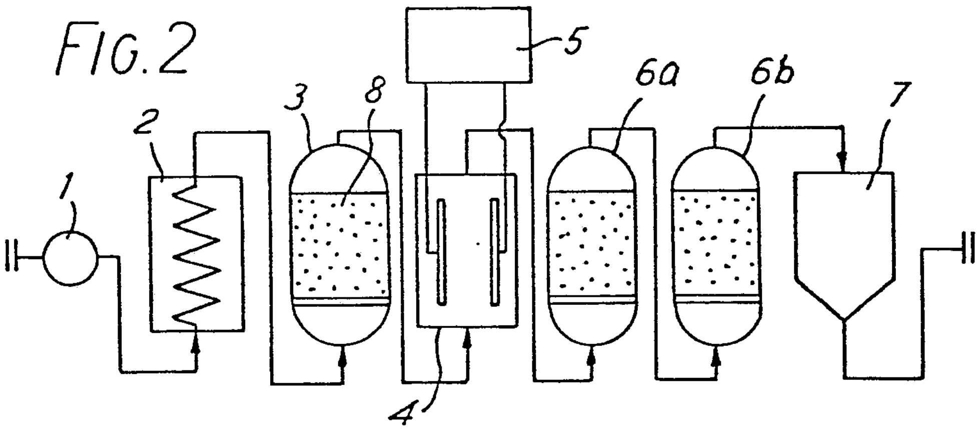


FIG.3